# EUROPEAN PATENT APPLICATION

(11) **EP 2 709 002 A2**
(43) Date of publication of application: **19.03.2014**
(21) Application number: 13183987.0
(22) Date of filing: 11.09.2013
(51) Int. Cl.: G06F 3/16

(54) **Method for outputting audio data through external device and portable terminal for the same**

(30) Priority: 14.09.2012 KR 20120102248
(71) Applicant: Samsung Electronics Co., Ltd, Gyeonggi-do 443-742 (KR)
(72) Inventor: Ban, Seong-Jun, 443-742 Gyeonggi-do (KR); Oh, Min-Woo, 443-742 Gyeonggi-do (KR); Lee, Byoung-Hee, 443-742 Gyeonggi-do (KR)
(74) Representative: Jenkins, Richard Gavin

(57) **Abstract**

A method for outputting audio data through an external device while preventing the generation of noise, and a portable terminal for the same are provided. The method for outputting audio data through the external device by the portable terminal includes identifying a connection voltage applied to a connection resistor included in the external device when a connection of the portable terminal to the external device is sensed, identifying a device code corresponding to the connection voltage, determining whether the external device is an audio output device according to the device code, and connecting a Universal Serial Bus (USB) interface, which is to be connected to the external device, to a ground (GND) for audio output if the external device is the audio output device.

## Description

### BACKGROUND OF THE INVENTION

### 1. Field of the Invention:

The present invention relates to a method for outputting audio data through an external device and a portable terminal for the same. More particularly, the present invention relates to a method for outputting audio data through an external device while preventing the generation of noise, and a portable terminal for the same.

### 2. Description of the Related Art:

Portable terminals are portable devices which may be easily carried and have one or more of functions, such as supporting voice and video telephony, inputting and/or outputting information, and storing data. As multifunctional portable terminals are developed, they are implemented in the form of multimedia devices having multimedia functions such as capturing still images or moving images, reproducing music or video files, playing games, and receiving broadcasts.

Various new technologies have been applied to the portable terminals in terms of hardware and software in order to implement the portable terminals which provide the various functions as described above. For example, a user interface environment which allows users to easily and conveniently search for or select functions is provided.

A portable terminal includes multiple interfaces for providing various functions. For example, the interface may include at least one of an input/output terminal for communicating data with an external device, a power supply terminal, for example, a Direct Current (DC) jack, for charging a battery with power and supplying power to the portable terminal, an Infrared Data Association (IrDA) port for shortrange wireless communication, and a connection terminal for connecting an earphone jack. In order reduce the size of the portable terminal, sizes of multiple interfaces included in the portable terminal may be reduced, functions that the multiple interfaces can provide are intended to be multifunctional, and thereby the number of interfaces included in the portable terminal is reduced.

A 5-pin micro-Universal Serial Bus (µUSB) interface corresponding to one of interfaces included in the portable terminal may be connected to an external device, and may simultaneously implement a charging function and an audio output function. However, when an audio output function of the portable terminal is executed during charging of the portable terminal through the 5-pin µUSB interface, a ground (GND) for audio output may fluctuate in response to a phenomenon wherein a GND for charging fluctuates due to a current flow during charging of the portable terminal. Also, when the GND for audio output fluctuates, noise may be generated in an audio signal which is output by the portable terminal.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method for outputting audio data through an external device while preventing the generation of noise, and a portable terminal for the same.

In accordance with an aspect of the present invention, a method for outputting audio data through an external device by a portable terminal is provided. The method includes identifying a connection voltage applied to a connection resistor included in the external device when a connection of the portable terminal to the external device is sensed, identifying a device code corresponding to the connection voltage, determining whether the external device is an audio output device according to the device code, and connecting a Universal Serial Bus (USB) interface, which is to be connected to the external device, to a ground (GND) for audio output if the external device is the audio output device.

In accordance with another aspect of the present invention, a portable terminal for outputting audio data through an external device is provided. The portable terminal includes a connection unit configured to identify a connection voltage applied to a connection resistor included in the external device if a connection of the portable terminal to the external device is sensed, and a controller configured to determine whether the external device is an audio output device according to a device code corresponding to the connection voltage, and control the connection unit so as to connect a USB interface, which is connected to the external device, to a GND for audio output if the external device is the audio output device.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of a portable terminal according to an exemplary embodiment of the present invention;

FIG. 2 is a flowchart illustrating a method for outputting audio data by the portable terminal illustrated in FIG. 1 according to an exemplary embodiment of the present invention;

FIG. 3 is a circuit diagram illustrating an interface connection between the portable terminal illustrated in FIG. 1 and an external device according to an exemplary embodiment of the present invention; and

FIG. 4 is a circuit diagram illustrating ground (GND) connections in a case where a first Universal Serial Bus (USB) interface of the portable terminal illustrated in FIG. 3 is physically connected to a second USB interface of the external device illustrated in FIG. 3 according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

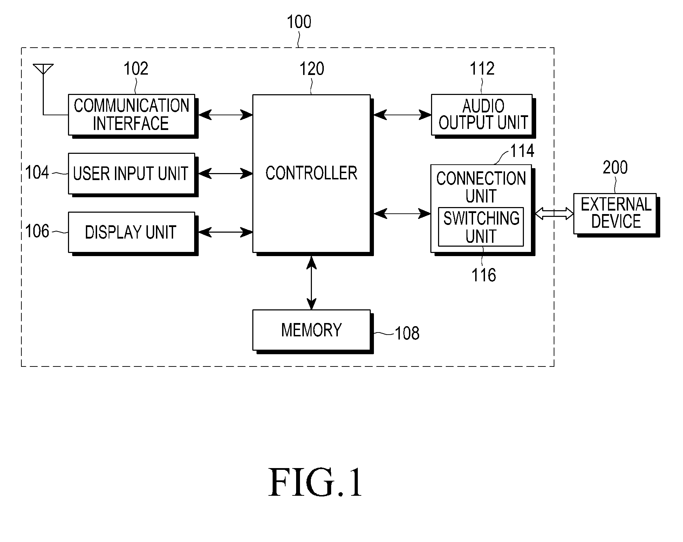

FIG. 1 is a block diagram illustrating a configuration of a portable terminal according to an exemplary embodiment of the present invention.

Referring to FIG. 1, a portable terminal 100 may be connected to an external device 200. Referring to FIG. 1, the portable terminal 100 includes an audio output unit 112, a connection unit 114, a switching unit 116 and a controller 120, and may further include a communication interface 102, a user input unit 104, a display unit 106, and a memory 108. The communication interface 102 performs a wired communication function or a wireless communication function of the portable terminal 100.

The user input unit 104 receives a user input which is input by a user. The user input unit 104, according to this exemplary embodiment of the present invention may receive user input for outputting audio data through the external device 200. Also, according to another exemplary embodiment of the present invention, the user input unit 104 may receive a user input for performing a power charging operation of charging a battery of the portable terminal 100 by using the external device 200.

The display unit 106 displays various data stored in the portable terminal 100. According to an exemplary embodiment of the present invention, the display unit 106 may display various pieces of information, for example, the title of a song, the lyrics of the song, and the name of a singer, corresponding to audio data which is being reproduced by the external device 200.

The memory 108 stores various data for controlling the portable terminal 100. The memory 108, according to this exemplary embodiment of the present invention, may store various audio data that the audio output unit 112 outputs. Also, the memory 108 may store a device code table, which may be predetermined and/or preset as shown in Table 1 below.

**Table 1**

| Level of connection voltage | Device code | Type of external device |
|---|---|---|
| level 1 | 0x0x0x0x0 | video dock |
| level 2 | 0x00x000x | audio dock |
| level 3 | 0x00x00xx | personal computer |
| ··· | ··· | ··· |

As can be noted from Table 1, connection voltages, device codes, and types of external devices are stored in the device code table, in such a manner that the connection voltages are matched to the device codes according to the types of external devices.

The audio output unit 112 outputs audio data. The audio output unit 112, according to this exemplary embodiment of the present invention, may output audio data which has already been stored in the memory 108 to the external device 200, which may be a device for audio output, such as an audio dock, earphones, or a headphone, through an interface, such as a 5-pin micro-Universal Serial Bus (µUSB) interface, included in the connection unit 114.

The connection unit 114 senses a connection between the portable terminal 100 and the external device 200. The connection unit 114, according to this exemplary embodiment of the present invention, may sense that the portable terminal 100 is connected to the device for audio output through an interface included in the connection unit 114. The portable terminal 100, according to this exemplary embodiment of the present invention, may be connected to the audio dock corresponding to the external device 200 through the 5-pin µUSB interface. When the portable terminal 100 is connected to the external device 200 through the connection unit 114, due to a resistor, which may be referred to as a "connection resistor", which is previously included in the external device 200, a voltage, which may be referred to as a "connection voltage", is applied to the external device 200. The connection unit 114, according to this exemplary embodiment of the present invention, may sense the connection voltage generated when the portable terminal 100 is connected to the external device 200.

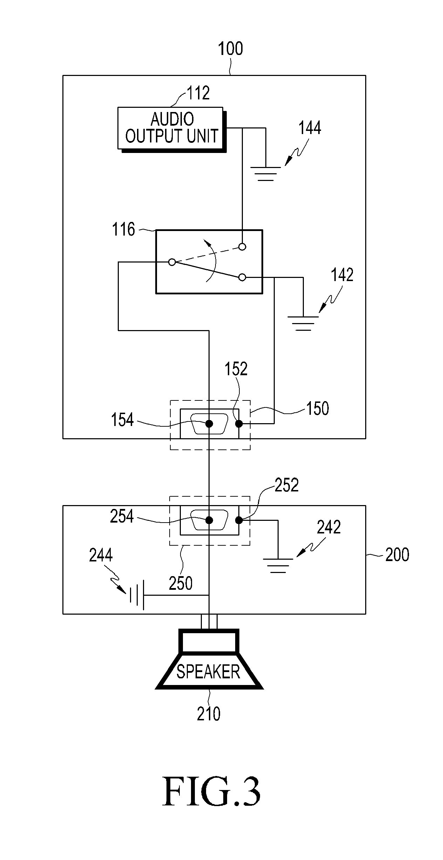

Under the control of the controller 120, the switching unit 116, which is included in the connection unit 114, is connected to a first ground (GND) 142 (see FIG. 3), which is for power charging and which is already included in the portable terminal 100, or is connected to a first GND 144 (see FIG. 3), which is for audio output. The first GND 142 for power charging is a GND for charging the portable terminal 100 with power. The first GND 142 for power charging, for example, may be connected to a second GND 242 for power charging of the external device 200, and may be supplied with power by the external device 200. The first GND 144 for audio output is connected to the audio output unit 112, and outputs audio data to the outside of the portable terminal 100. According to an exemplary embodiment of the present invention, a first GND 144 for audio output may be connected to a second GND 244 (see FIG. 3) for audio output of the external device 200 and a speaker 210 (see FIG. 3), and may output audio data stored in the portable terminal 100 to the speaker 210.

The controller 120 controls an overall operation of the portable terminal 100. When the controller 120, according to this exemplary embodiment of the present invention, controls the connection unit 114 so as to sense that the portable terminal 100 is connected to the external device 200 through the connection unit 114, the controller 120 may control the connection unit 114 so as to sense a connection voltage applied to the connection resistor already included in the external device 200.

When the portable terminal 100 is connected to the external device 200, a current flowing within the portable terminal 100 flows even to the external device 200 due to the connection between the portable terminal 100 and the external device 200. The connection voltage is applied to the connection resistor when a current flowing within the portable terminal 100 flows through the connection resistor of the external device 200. The controller 120 receives the value of the connection voltage applied to the connection resistor of the external device 200, which has been delivered by the connection unit 114.

The controller 120 may sense a type of the external device 200 based on the connection voltage. The controller 120 determines the type of the external device 200 based on a device code table which has already been stored in the memory 108. An example of the device code table is described with reference to Table 1 as follows. When the controller 120 receives, from the connection unit 114, a "level 2" as the value of a connection voltage of the external device 200, the controller 120 identifies "0x00x000x" representing a device code matched to the level 2. Also, the controller 120 identifies an audio dock corresponding to the type of external device matched to the device code "0x00x000x," and thereby may identify a connection between the portable terminal 100 and the audio dock.

According to an exemplary embodiment of the present invention, after the controller 120 identifies the device code matched to the connection voltage, it determines whether the external device 200 matched to the device code is a device for audio output, such as an audio dock.

The portable terminal 100, according to this exemplary embodiment of the present invention, may have both the first GND 142 for power charging and the first GND 144 for audio output included in one interface. Also, only when the external device 200, for example the device for audio output, is connected to the first GND 144 for audio output of the portable terminal 100, it may receive audio data which is output from the portable terminal 100, and may output the received audio data through the speaker 210.

Additionally, this exemplary embodiment of the present invention may separate the first GND 142 for power charging from the first GND 144 for audio output in order to prevent the generation of noise in audio data which is output from the external device 200. Accordingly, when the portable terminal 100 is connected to a device for audio output while the portable terminal 100 is charged with power, or when the portable terminal 100 begins to be charged while the portable terminal 100 is connected to the audio dock, the controller 120 may control the switching unit 116 so as to prevent the audio output unit 112 from being connected to the first GND 142 for power charging. Specifically, the controller 120 controls the switching unit 116 of the connection unit 114 so as to complete a connection between an interface, for example, a first USB interface 150 (see FIG. 3), which is already included in the portable terminal 100, and a first GND 142 for power charging in order to physically connect the portable terminal 100 to the external device 200. Also, the controller 120 controls the switching unit 116 of the connection unit 114 so as to connect the first GND 144 for audio output, which may be previously connected to the audio output unit 112, to the first USB interface 150.

In contrast, when the external device 200 is not the device for audio output, the controller 120 may not perform a separate operation. Specifically, even when the first GND 142 for power charging is connected to an interface of the external device 200, for example, a second USB interface, through the first USB interface 150, the controller may control 120 the portable terminal 100 so as to maintain the connection of the first GND 142 for power charging to the interface of the external device 200.

According to an exemplary embodiment of the present invention, when the external device 200 is a device for audio output, such as an audio dock, the controller 120 determines, based on a device code table, whether user input for outputting audio data through the device for audio output has been received by the user input unit 104. When the user input for outputting the audio data through the device for audio output has been received by the user input unit 104, the controller 120 controls the switching unit 116 of the connection unit 114, and allows the first GND 144 for audio output to be connected to the first USB interface 150.

Desirably, the first USB interface 150 may include a first interface 152 (see FIG. 3) for power charging and a first interface 154 (see FIG. 3) for audio output. The first interface 152 for power charging and the first interface 154 for audio output may be implemented as separate elements. Accordingly, when the user input for outputting the audio data through the device for audio output has been received by the user input unit 104, then the controller 120 may control the switching unit 116 of the connection unit 114 so as to connect the first GND 144 for audio output to the first interface 154 for audio output.

On the other hand, when the user input for outputting the audio data through the device for audio output has not been received by the user input unit 104, the controller 120 may control the switching unit 116 of the connection unit 114 so as to connect the first GND 142 for power charging to the first interface 152 for power charging. The controller 120 may perform a control operation so as to connect the first GND 142 for power charging to the first interface 152 for power charging as described above, and thereby may perform a control operation so as to automatically charge the battery of the portable terminal 100 by using the external device 200.

According to an exemplary embodiment of the present invention, when the user input for outputting the audio data through the device for audio output has been received by the user input unit 104, then the controller 120 may determine whether a power charging operation of charging the battery of the portable terminal 100 by using the device for audio output is being performed. When the power charging operation is being performed, the controller 120 controls the switching unit 116 so as to complete the connection between the first GND 142 for power charging and the first interface 152 for power charging, and so as to connect the first GND 144 for audio output to the first interface 152 for power charging.

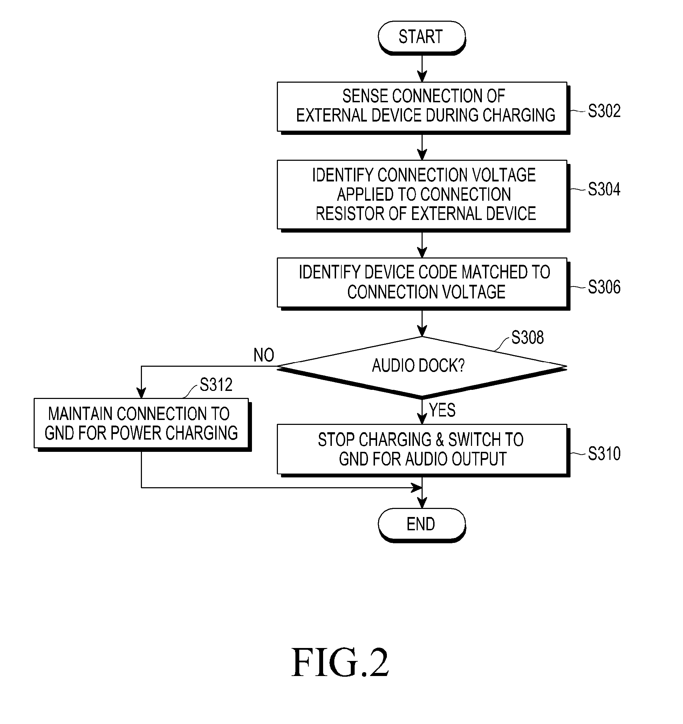

FIG. 2 is a flowchart illustrating a method for outputting audio data by the portable terminal illustrated in FIG. 1 according to an exemplary embodiment of the present invention.

In this exemplary embodiment of the present invention, it is assumed that the portable terminal 100 is being charged with power. While the portable terminal 100 is being charged with power, the connection unit 114 senses a connection of the external device 200 to the portable terminal 100 in step S302. In step S302, the connection unit 114 senses that an external device 200 is connected to the portable terminal 100 and thereby a connection voltage is applied to a connection resistor which is already included in the external device 200. According to an exemplary embodiment of the present invention, the connection unit 114 may deliver the value of the connection voltage, which is applied to the connection resistor, to the controller 120.

The controller 120 identifies the connection voltage applied to the connection resistor of the external device 200 in step S304. Then, the controller 120 identifies a device code matched to the connection voltage in step S306. The controller 120 determines whether an external device 200 matched to the device code identified in step S306 is an audio dock in step S308. At this time, the controller 120 may identify the type of the external device 200, which the connection unit 114 has sensed in step S302, by using a device code table which is stored in the memory 108.

When a result of the determination in step S308 shows that the external device 200 is the audio dock, then the controller 120 performs a control operation so as to stop the charging operation, and controls the switching unit 116 so as to change a GND connection to the first GND 144 for audio output in step S310. In the portable terminal 100 according to this exemplary embodiment of the present invention, both the first GND 144 for audio output and the first GND 142 for power charging are included in an identical interface, for example, a 5-pin µUSB interface. Therefore, the controller 120 controls the switching unit 116 so as to perform switching in such a manner as to connect the GND of the portable terminal 100 connected to the audio dock only to the first GND 144 for audio output. In step S310, the switching unit 116 disconnects its connection to the first GND 142 for power charging, and connects the first GND 144 for audio output to the audio output unit 112. Accordingly, the power charging operation of charging the battery of the portable terminal 100 may be stopped. Also, by stopping the power charging operation, it is possible to prevent noise which may be generated due to the output of audio data through the external device 200 during charging.

When the result of the determination in step S308 shows that the external device 200 is not the audio dock, then the controller 120 controls the switching unit 116 so as to maintain its connection to the first GND 142 for power charging in step S312.

FIG. 3 is a circuit diagram illustrating an interface connection between the portable terminal illustrated in FIG. 1 and an external device according to an exemplary embodiment of the present invention.

Referring to FIG. 3, the external device 200 connected to the portable terminal 100 is an audio dock. However, the present invention is not limited thereto, and the external device 200 may be any suitable and/or similar electronic device that may connect to the portable terminal 100. Also, the audio dock may charge the battery of the portable terminal 100 with power. Otherwise, the audio dock may receive audio data from the portable terminal 100, and may output the received audio data through the speaker 210.

Referring to FIG. 3, the portable terminal 100 and the audio dock include the first USB interface 150 and a second USB interface 250, respectively, and are connected to each other through the first USB interface 150 and the second USB interface 250.

The audio output unit 112 of the portable terminal 100 is connected to both the first GND 144 for audio output and the switching unit 116. Also, when a switch of the switching unit 116 is connected to the audio output unit 112, the audio output unit 112 is connected to the first interface 154 for audio output of the first USB interface 150. When the battery of the portable terminal 100 is being charged with power, the first GND 142 for power charging is connected to the first interface 152, for power charging of the first USB interface 150, through the switching unit 116.

As can be seen in FIG. 3, the first GND 142 for power charging of the portable terminal 100 is separated from the first GND 144 for audio output thereof, and the switch of the switching unit 116 disposed between the first GND 142 for power charging and the first GND 144 for audio output, or may be disposed at any suitable and/or similar position. In this exemplary embodiment of the present invention, the controller 120 controls the switching unit 116, and allows the first USB interface 150 to be connected to any one of the first GND 142 for power charging and the first GND 144 for audio output. The second USB interface 250 of the external device 200 includes a second interface 252 for power charging, which is connected to the second GND 242 for power charging, and a second interface 254 for audio output, which is connected to the speaker 210.

As illustrated in FIG. 3, while the battery of the portable terminal 100 is charged with power, the first GND 142 for power charging is connected to the first interface 152 for power charging of the first USB interface 150. Also, the first interface 152 for power charging is connected to the second interface 252 for power charging of the audio dock. In this exemplary embodiment of the present invention, the first interface 152 for power charging and the second interface 252 for power charging are physically combined, and thereby may be connected to each other. The second interface 252 for power charging is connected to the second GND 242 for power charging within the audio dock. As described above, the portable terminal 100 is connected to the audio dock, and thereby the battery of the portable terminal 100 is charged with power.

Also, when the portable terminal 100 outputs audio data to the speaker 210 of the external device 200, such as the audio dock, the first GND 144 for audio output is connected to the first interface 154 for audio output of the first USB interface 150, and the first interface 154 for audio output is connected to the second interface 254 for audio output of the audio dock. In this exemplary embodiment of the present invention, the first interface 154 for audio output and the second interface 254 for audio output are physically combined, and thereby may be connected to each other. The second interface 254 for audio output is connected to the speaker 210 of the audio dock through the second GND 244 for audio output, which may be a GND for a speaker. As connected above, audio data, which has been output from the audio output unit 112, may be output to the speaker 210 through the first USB interface 150 and the second USB interface 250.

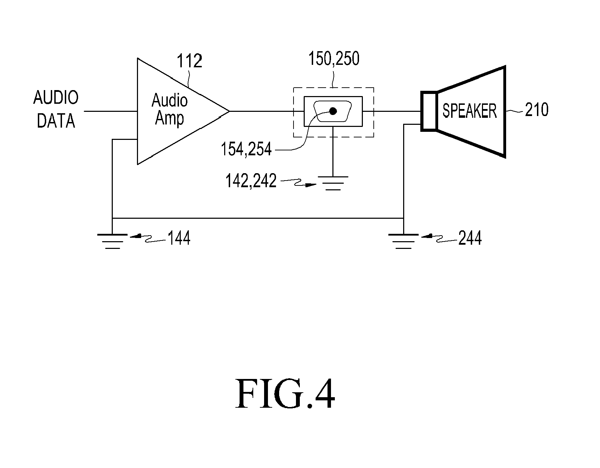

FIG. 4 is a circuit diagram illustrating GND connections in a case where a first USB interface of the portable terminal illustrated in FIG. 3 is physically connected to a second USB interface of the external device illustrated in FIG. 3 according to an exemplary embodiment of the present invention.

Referring to FIGS. 3 and 4, the portable terminal 100 includes the first GND 142 for power charging and the first GND 144 for audio output, which are implemented as separate elements.

Referring to FIG. 4, audio data is output from the audio output unit 112, which may be an audio amplifier or audio amp, to the first USB interface 150, and simultaneously, is input into the second USB interface 250 physically connected to the first USB interface 150. The audio data which is input into the second USB interface 250 is output to the speaker 210. At this time, the first interface 154 for audio output and the second interface 254 for audio output are physically combined. The first GND 144 for audio output, which is connected to the audio output unit 112, and the second GND 244 for audio output both maintain an identical GND. Also, as described above, the connection between the first GND 144 for audio output and the second GND 244 for audio output is separated from the connection between the first USB interface 152 for power charging and the second USB interface 252 for power charging. Accordingly, the first USB interface 152 for power charging and the second USB interface 252 for power charging are connected to the first GND 142 for power charging and the second GND 242 for power charging, respectively. The first GND 142 for power charging and the first GND 144 for audio output are not connected to each other.

As described above, the portable terminal 100 according to this exemplary embodiment of the present invention includes the first GND 142 for power charging and the first GND 144 for audio output, which are implemented as separated elements. Accordingly, it is possible to prevent noise of audio data which may be generated due to a connection between the first GND 142 for power charging and the first GND 144 for audio output.

As described above, exemplary embodiments of the present invention are advantageous in that the method for outputting audio data through an external device while preventing the generation of noise and the portable terminal for the same are provided.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for outputting audio data through an external device by a portable terminal, the method comprising:
identifying a connection voltage applied to a connection resistor included in the external device when a connection of the portable terminal to the external device is sensed;
identifying a device code corresponding to the connection voltage;
determining whether the external device is an audio output device according to the device code; and
connecting a Universal Serial Bus (USB) interface, which is to be connected to the external device, to a ground (GND) for audio output if the external device is the audio output device.

2. The method as claimed in claim 1, further comprising connecting the USB interface to a GND for audio output of the external device by the external device.

3. The method as claimed in claim 1, further comprising:
determining whether a user input for outputting audio data through the external device is received before connecting the USB interface to the ground (GND) for audio output, if the external device is the audio output device.

4. The method as claimed in claim 3, further comprising:
connecting a GND for power charging to the USB interface if the user input for outputting the audio data through the external device is not received.

5. The method as claimed in claim 4, further comprising:
connecting, by the external device, the USB interface to a GND for charging, which is included in the external device.

6. The method as claimed in claim 3, further comprising:
determining whether a power charging operation is being performed if the user input for outputting the audio data through the external device is received; and
completing a connection between a GND for power charging and the USB interface when the power charging operation is being performed.

7. The method as claimed in claim 6, further comprising:
continuously performing the power charging operation when the user input for outputting the audio data through the external device is not received.

8. A portable terminal for outputting audio data through an external device, the portable terminal comprising:
a connection unit configured to identify a connection voltage applied to a connection resistor included in the external device, if a connection of the portable terminal to the external device is sensed; and
a controller configured to:
determine whether the external device is an audio output device according to a device code corresponding to the connection voltage, and
control the connection unit so as to connect a Universal Serial Bus (USB) interface, which is connected to the external device, to a ground (GND) for audio output if the external device is the audio output device.

9. The portable terminal as claimed in claim 8, wherein the USB interface is connected to a GND for audio output, which is included in the external device, by the external device.

10. The portable terminal as claimed in claim 8, further comprising:
a user input unit configured to receive a user input for outputting audio data through the external device.

11. The portable terminal as claimed in claim 10, wherein the controller determines whether the user input for outputting the audio data through the external device is received, and
wherein the controller controls the connection unit to connect the USB interface to a GND for power charging if the user input for outputting the audio data through the external device is not received.

12. The portable terminal as claimed in claim 11, wherein the USB interface is connected to a GND for power charging, which is included in the external device, by the external device.

13. The portable terminal as claimed in claim 10, wherein the controller determines whether the user input for outputting the audio data through the external device is received, and
wherein the controller determines whether a power charging operation is being performed if the user input for outputting the audio data through the external device is received.

14. The portable terminal as claimed in claim 13, wherein, if the power charging operation is being performed, the controller controls the connection unit so as to complete a connection between a GND for power charging and the USB interface, and so as to connect the USB interface to the GND for the audio output.

15. The portable terminal as claimed in claim 14, wherein the controller controls the connection unit so as to maintain the connection between the GND for the power charging and the USB interface, if the user input for outputting the audio data through the external device is not received.
